# EUROPEAN PATENT APPLICATION

(11) **EP 3 979 734 A1**
(43) Date of publication of application: **06.04.2022**
(21) Application number: 20813175.5
(22) Date of filing: 22.05.2020
(51) Int. Cl.: H04W 72/04

(54) **PDSCH TIME-FREQUENCY RESOURCE ALLOCATION METHOD AND DEVICE, BASE STATION AND STORAGE MEDIUM**

(30) Priority: 29.05.2019 CN 201910458832
(71) Applicant: ZTE Corporation, Shenzhen, Guangdong 518057 (CN)
(72) Inventor: TIAN, Jingjing, Shenzhen, Guangdong 518057 (CN); FANG, Ming, Shenzhen, Guangdong 518057 (CN); SUN, Jin, Shenzhen, Guangdong 518057 (CN)
(74) Representative: Ipsilon
(86) International application number: PCT/CN2020/091783
(87) International publication number: WO 2020/238792

(57) **Abstract**

The embodiments of the present application provide a method and apparatus for configuring PDSCH time-frequency resources, a base station and a storage medium. The method includes: using target time-frequency resources to bear a PDSCH, the target time-frequency resources being time-frequency resources among the time-frequency resources corresponding to symbols of a search space set CORESET other than those occupied by a physical downlink control channel (PDCCH).

## Description

### TECHNICAL FIELD

Embodiments of the present disclosure relate to, but are not limited to, the field of communication technologies.

### BACKGROUND

The wireless communication technology has penetrated into various aspects of people's daily life, and wireless systems are widely deployed to provide various types of communication contents, such as voices, data, videos, and so on, for the convenience of work/office activities as well as leisure activities. These systems may be multiple-access systems capable of supporting communication with multiple users by sharing available system resources (e.g., time, bandwidth, and transmission power, etc.). Examples of such multiple-access systems include Code Division Multiple Access (CDMA) systems, Time Division Multiple Access (TDMA) systems, Frequency Division Multiple Access (FDMA) systems, Single Carrier Frequency Division Multiple Access (SC-FDMA) systems, and Orthogonal Frequency Division Multiple Access (OFDMA) systems.

In the existing art, a wireless multiple access communication system may include a plurality of base stations, etc., where each base station simultaneously supports communication with a plurality of communication devices, each of which may be referred to as User Equipment (UE). The base station may allocate resources of an uplink channel and a downlink channel such as a PDCCH (Physical Downlink Control Channel) and a PDSCH (Physical Downlink Shared Channel) by scheduling.

### SUMMARY

In one aspect, an embodiment of the present disclosure provides a method for configuring PDSCH time-frequency resources, including: using target time-frequency resources to bear a PDSCH, the target time-frequency resources being time-frequency resources among the time-frequency resources corresponding to a symbol to which a control resource set (CORESET) belongs other than those occupied by a physical downlink control channel (PDCCH).

In another aspect, an embodiment of the present disclosure further provides an apparatus for configuring PDSCH time-frequency resources, including: a configuration module configured to use target time-frequency resources to bear a PDSCH, the target time-frequency resources being time-frequency resources among the time-frequency resources corresponding to a symbol to which a control resource set (CORESET) belongs other than those occupied by a physical downlink control channel (PDCCH).

In another aspect, an embodiment of the present disclosure further provides a scheduler configured to implement the method for configuring PDSCH time-frequency resources as described above.

In another aspect, an embodiment of the present disclosure further provides a base station, including: a processor, a memory, and a communication bus; where the communication bus is configured to enable connection and communication between the processor and the memory; and the processor is configured to execute one or more computer programs stored in the memory to implement the method for configuring PDSCH time-frequency resources as described above.

In another aspect, an embodiment of the present disclosure further provides a storage medium having one or more computer programs stored thereon which are executable by one or more processors to implement the method for configuring PDSCH time-frequency resources as described above.

### BRIEF DESCRIPTION OF DRAWINGS

FIG. 1 is a flowchart of a method for configuring PDSCH time-frequency resources according to a first embodiment of the present disclosure;
FIG. 2 is a schematic diagram of target time-frequency resources according to the first embodiment of the present disclosure;
FIG. 3 is a schematic diagram of another target time-frequency resources according to the first embodiment of the present disclosure;
FIG. 4 is a schematic diagram of an MCS table according to the first embodiment of the present disclosure;
FIG. 5 is a schematic diagram of an TBS table according to the first embodiment of the present disclosure;
FIG. 6 is a flowchart of a method for configuring PDSCH time-frequency resources according to a second embodiment of the present disclosure;
FIG. 7A is a schematic diagram of time-frequency resources corresponding to a first example of the second embodiment;
FIG. 7B is another schematic diagram of time-frequency resources corresponding to the first example of the second embodiment;
FIG. 8A is a schematic diagram of time-frequency resources corresponding to a second example of the second embodiment;
FIG. 8B is another schematic diagram of time-frequency resources corresponding to the second example of the second embodiment;
FIG. 9A is a schematic diagram of time-frequency resources corresponding to a third example of the second embodiment;
FIG. 9B is another schematic diagram of time-frequency resources corresponding to the third example of the second embodiment;
FIG. 10 is a diagram of an apparatus for configuring PDSCH time-frequency resources according to a third embodiment of the present disclosure; and
FIG. 11 is a schematic structural diagram of a base station according to a fourth embodiment of the present disclosure.

### DETAIL DESCRIPTION OF EMBODIMENTS

For clarity and better understanding of the objects, technical solutions and advantages of the disclosure, embodiments of the present disclosure will be described in further detail with reference to the following detailed description and accompanying drawings. It will be appreciated that the specific embodiments described herein are merely for illustration of the disclosure and are not intended to limit the disclosure. It should be noted that the embodiments of the disclosure and features therein may be combined with each other in any manner as long as they are not contradictory.

In the existing art, a wireless multiple access communication system may include a plurality of base stations, etc., where each base station simultaneously supports communication with a plurality of communication devices, each of which may be referred to as User Equipment (UE). The base station may allocate resources of an uplink channel and a downlink channel such as a PDCCH (Physical Downlink Control Channel) and a PDSCH (Physical Downlink Shared Channel) by scheduling.

However, in the existing art, a large number of time-frequency resources are in an idle state during one downlink scheduling of resources, causing waste of the time-frequency resources.

Accordingly, embodiments of the present disclosure provide a method and apparatus for configuring PDSCH time-frequency resources, a scheduler, a base station and a storage medium, which substantially solve one or more of the problems caused by limitations and disadvantages of the existing art.

### Embodiment I

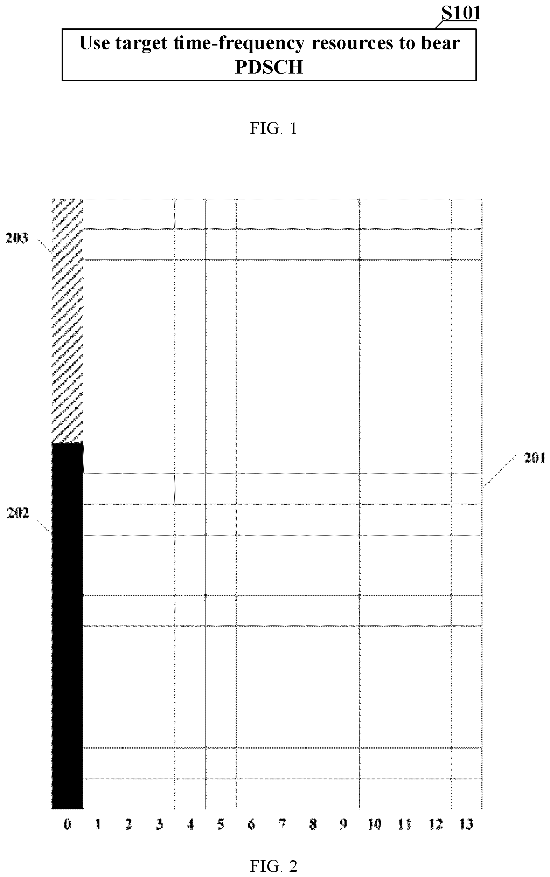

A control resource set (CORESET), which is configurable, refers to a set containing multiple PDCCH downlink time-frequency resources. However, the flexibly configurable CORESET has a problem: if the time-frequency resources occupied by the CORESET does not cross the whole system bandwidth or if the PDCCH does not use up all the time-frequency resources of the CORESET, on the time-frequency resources corresponding to the symbol to which the CORESET belongs, there will be redundant time-frequency resources that are not used to bear the PDCCH, or used to bear other downlink channels in the existing art, causing waste of resources. In order to solve the above technical problem, an embodiment of the present disclosure provides a method for configuring PDSCH time-frequency resources. As shown in FIG. 1, the method may include operation S101.

At operation S101, target time-frequency resources are used to bear a PDSCH.

In an embodiment of the present disclosure, the target time-frequency resources are time-frequency resources among the time-frequency resources corresponding to a symbol to which a CORESET belongs other than those occupied by a PDCCH. It should be noted that in one scheduling, part of the time-frequency resources will be scheduled to serve as the CORESET, and the CORESET includes time-frequency resources used to bear the PDCCH, that is, time-frequency resources occupied by the PDCCH. For the symbol, it is a unit of measurement in the time domain, 1 symbol is 1/14ms (milliseconds), one subframe (1 ms) includes 2 time slots (1/2 ms), and 1 time slot includes 7 symbols. The symbols corresponding to the time-frequency resources occupied by the CORESET are the symbol to which the CORESET belongs. In an embodiment of the present disclosure, the time-frequency resources among the time-frequency resources corresponding to the symbol to which the CORESET belongs other than those occupied by a PDCCH are taken as target time-frequency resources used to bear the PDSCH, thereby avoiding waste of resources. For example, as shown in FIG. 2, assuming that the total resources 201 of this scheduling occupy 1ms in the time domain, and the bandwidth occupied by the total resources 201 in the frequency domain is 20M, the horizontal direction in the figure represents the time domain, and the vertical direction represents the frequency domain, then the total resources 201 include 14 symbols, i.e., symbol 0 to symbol 13, the symbol for the time-frequency resources occupied by the CORESET is symbol 0 in the time domain, in the CORESET, the PDCCH occupies time-frequency resources 202, and the target time-frequency resources 203 include time-frequency resources in the time-frequency resources (i.e., all time-frequency resources on the symbol 0) corresponding to a symbol (i.e., symbol 0) to which the CORESET belongs other than the time-frequency resources 202 occupied by the PDCCH. In this embodiment, all the time-frequency resources among the time-frequency resources corresponding to the symbol to which the CORESET belongs other than those occupied by a PDCCH may be taken as the target time-frequency resources used to bear the PDSCH; or part of the time-frequency resources among the time-frequency resources corresponding to the symbol to which the CORESET belongs other than those occupied by a PDCCH may be taken as the target time-frequency resources used to bear the PDSCH.

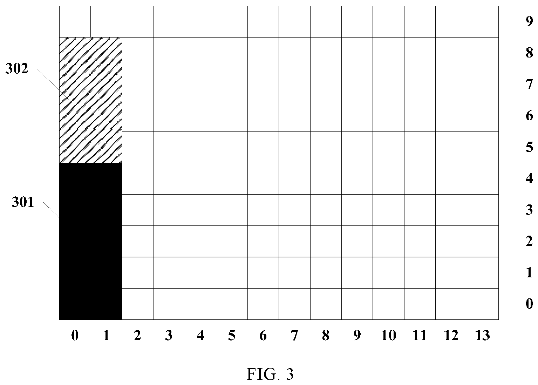

In one scheduling, a frequency will be scheduled for the PDSCH. Therefore, in the embodiment of the present disclosure, the frequency domain occupied by the PDSCH may be determined, and then, the target time-frequency resources may be determined according to the frequency domain occupied by the PDSCH. Here, the target time-frequency resources may be time-frequency resources having an overlapped frequency domain with the PDSCH among the time-frequency resources corresponding to a symbol to which the CORESET belongs other than those occupied by the PDCCH. That is, the target time-frequency resources have a frequency domain that is the same as the frequency domain scheduled for the PDSCH, and a time domain including the symbol to which the CORESET belongs, and the frequency domain of the target time-frequency resources does not overlap the frequency domain occupied by the PDCCH. For example, as shown in FIG. 3, the horizontal direction in FIG 3 represents the time domain, and the vertical direction represents the frequency domain. Assuming that in this scheduling, the total resources occupy 1ms, the bandwidth of the frequency domain is 10M, indicated by 0 to 9, and the symbols occupied by the CORESET are symbol 0 to symbol 1 and the frequency domain occupied by the CORESET is 0 to 5, then in the CORESET, the symbols occupied by the PDCCH time-frequency resources 301 are symbol 0 to symbol 1, and the frequency domain occupied by the PDCCH time-frequency resources 301 is 0 to 4. Assuming that the frequency domain scheduled for the PDSCH is 2 to 8 in this scheduling, then the target time-frequency resources 302 are as shown in FIG. 3, with a time domain including symbol 0 to symbol 1, and a frequency domain including 5 to 8.

It should be noted that in addition to the target time-frequency resources, the actual mapping time-frequency resources of the PDSCH further includes time-frequency resources other than the symbol to which the CORESET belongs (hereafter "the first time-frequency resource"), and then the PDSCH data is transmitted through the actual mapping time-frequency resources of the PDSCH. The actual mapping time-frequency resources are resources actually occupied by the PDSCH in the subsequent transmission. The first time-frequency resource refers to resources, other than those occupied by the CORESET, among the scheduled resources on the remaining symbols having a frequency domain being the frequency domain occupied by the PDSCH. The scheduled resources are the total resources for this scheduling. For example, assuming that the scheduled resources correspond to 14 symbols, which are respectively indicated as symbol 0 to symbol 13, and that the CORESET belongs to symbol 0, symbol 1 and symbol 2, and the PDSCH occupies the frequency domain of 10M to 15M, then the first time-frequency resource belongs to symbols 3 to 13, and occupies the frequency domain of 10M to 15M. Therefore, the actual mapping time-frequency resources can be determined according to the target time-frequency resources, the number of symbols of scheduled resources, the CORESET and the frequency domain occupied by the PDSCH.

In an embodiment of the present disclosure, when determining the code rate, the code rate may be determined from the actual mapping time-frequency resources, or may be determined from the maximum available time-frequency resource of the PDSCH. The maximum available time-frequency resource is determined from information on the maximum available time domain symbol and the frequency domain occupied by the PDSCH. The information on the maximum available time domain symbol includes a second total number of symbols and/or a second start symbol. The second total number of symbols includes the number of symbols corresponding to the remaining time-frequency resources among the time-frequency resources corresponding to the symbol to which the CORESET belongs other than those occupied by a PDCCH, and the corresponding number of the remaining symbols in the scheduled resources other than the symbol to which the CORESET belongs. For example, assuming that the scheduled resources correspond to 14 symbols, which are respectively indicated as symbol 0 to symbol 13, and that the CORESET belongs to symbol 0, symbol 1 and symbol 2, each of which has remaining resources except those occupied by the PDCCH, then the remaining resources corresponding to 3 symbols, and except the symbol to which the CORESET belongs, the symbols left in the scheduled resources are symbol 3 to symbol 13, corresponding to 11 symbols, and thus, the second total number of symbols is 14. If, among the time-frequency resources corresponding to the symbol to which the CORESET belongs, there is no remaining resource other than the time-frequency resources occupied by the PDCCH, the second total number of symbols includes only the corresponding number of the remaining symbols in the scheduled resources other than the symbol to which the CORESET belongs. The second start symbol is determined from a start symbol of the remaining time-frequency resources among the time-frequency resources corresponding to the symbol to which the CORESET belongs other than those occupied by the PDCCH. For example, assuming that the CORESET belongs to symbol 0 and symbol 1, each of which has remaining resources except those occupied by the PDCCH, then the second start symbol is symbol 0. If, among the time-frequency resources corresponding to the symbol to which the CORESET belongs, there is no remaining resource other than the time-frequency resources occupied by the PDCCH, the second start symbol is a symbol after the symbol to which the CORESET belongs. Since the CORESET usually takes a position earlier in the time domain in the scheduled resources, there is a certain relationship among the second total number of symbols, the number of symbols of scheduled resources, and the second start symbol, and when the symbol starts with 0, the second total number of symbols + the second start symbol = the number of symbols of scheduled resources. Due to the relationship among the second total number of symbols, the number of symbols of scheduled resources, and the second start symbol, the second total number of symbols can be determined from the second start symbol and the number of symbols of scheduled resources. The number of symbols occupied by the maximum available time-frequency resource is the second total number of symbols, and the frequency domain of the maximum available time-frequency resource is the same as the frequency domain occupied by the PDSCH.

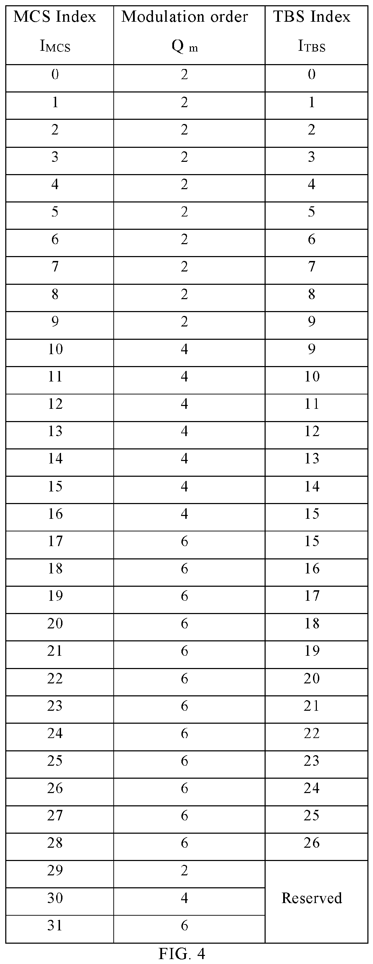

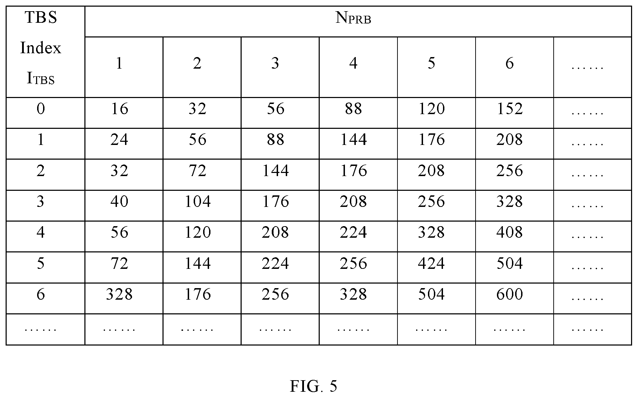

It should be noted that when determining the code rate from time-frequency resources, the typical method includes: determining, from the corresponding Channel Quality Indicator (CQI), a Modulation and Coding Scheme (MCS) corresponding to the time-frequency resource; determining a Transmission Block Size (TBS) from the number of Resource Blocks (RBs) and the MCS corresponding to the time-frequency resource, the MCS table shown in FIG. 4, and the TBS table shown in FIG. 5; determining a total number of bits from the MCS corresponding to the time-frequency resource and the number of resource elements (REs) corresponding to the time-frequency Resource; and determining the code rate from the total number of bits and the TBS: code rate = TBS/total number of bits. It should be noted that N_{PRB} in FIG. 5 represents the number of RBs, and FIG. 5 shows only TBSs corresponding to the number of RBs N_{PRB} "1" to "6" and to the TBS index I_{TBS} "0" to "6", respectively, but obviously, TBSs corresponding to the number of RBs N_{PRB} greater than "6" and the TBS index I_{TBS} greater than "6" may also be defined. For better understanding, it is assumed here by way of example that a certain time-frequency resource includes 5 RBs = 5 × 12 × 7RE = 420 REs (one RB represents 1 time slot (0.5 ms) in the time domain and occupies 12 subcarriers in the frequency domain; one RE occupies 1 OFDM Symbol (1/14 ms) in the time domain and 1 subcarrier in the frequency domain), and corresponds to an MCS index of 2, then as shown in FIG. 4, the MCS index I_{MCS} is 2, so the TBS index I_{TBS} is 2, the MCS corresponds to a modulation order Qₘ of 2, and the total number of bits = 420 × 2 = 840, and as shown in FIG. 5, the TBS index I_{TBS} is 2, the number N_{PRB} is 5, the corresponding TBS is 208, and code rate = TBS/total number of bits = 208/840.

In this embodiment, after determining the code rate, the code rate may be controlled, for example, according to a preset code rate threshold. Alternatively, if the code rate is determined from the maximum available time-frequency resource, then the code rate determined from the actual mapping time-frequency resources may be taken as a code rate threshold, the code rate determined from the maximum available time-frequency resource may be used as an initial code rate, and code rate control is performed on the initial code rate according to the code rate threshold. The controlled code rate is smaller than the code rate threshold. The code rate is related to the MCS, and when the initial code rate is greater than the code rate threshold, the initial code rate may be reduced by reducing the MCS index corresponding to the maximum available time-frequency resource. In an embodiment of the present disclosure, code rate information of the PDCSH in the Downlink Control Information (DCI) is determined from the code rate after the code rate control.

In an embodiment of the present disclosure, the code rate control may be performed on the code rate when the information on actual mapping time domain symbols is not consistent with the information on the maximum available time domain symbol. The information on actual mapping time domain symbols may include a first start symbol and/or a first total number of symbols, the first total number of symbols is the total number of symbols occupied by the actual mapping time-frequency resources, that is, the number of symbols corresponding to the target time-frequency resources and the number of the remaining symbols in the scheduled resources other than those occupied by the CORESET. For example, assuming that the scheduled resources occupy 14 symbols, which are respectively indicated as symbol 0 to symbol 13, the CORESET belongs to symbol 0 and symbol 1, and the target time-frequency resources belong to symbol 1, then the first total number of symbols = the number of symbols occupied by the target time-frequency resources + the number of remaining symbols in the scheduled resources other than the symbol to which the CORESET belongs = 1+12=13. If no target time-frequency resource is present, (that is, there is no time-frequency resource having an overlapped frequency domain with the PDSCH among the time-frequency resources corresponding to the symbol to which the CORESET belongs other than those occupied by the PDCCH; in other words, the target time-frequency resource is empty), the first total number of symbols includes only the number of the remaining symbols in the scheduled resources other than those occupied by the CORESET. The first start symbol is a start symbol corresponding to the target time-frequency resources, and if no target time-frequency resource is present, a symbol after the symbol to which the CORESET belongs may be taken as the first start symbol. Since in one scheduling, the resource occupied by the CORESET usually takes a position earlier in the time domain in the scheduled resources, there is a certain relationship among the first total number of symbols, the number of symbols of scheduled resources, and the first start symbol number, and when the symbol starts with 0, the first total number of symbols + the first start symbol = the number of symbols of scheduled resources. Due to the relationship among the first total number of symbols, the number of symbols of scheduled resources, and the first start symbol, the first total number of symbols can be determined from the first start symbol and the number of symbols of scheduled resources. It will be appreciated that when the information on actual mapping time domain symbols and the information on the maximum available time domain symbol are compared to determine whether they are consistent, the first start symbol is compared with the second start symbol, and the first total number of symbols is compared with the second total number of symbols.

In an embodiment of the present disclosure, the code rate may also be controlled when the actual mapping time-frequency resources are not consistent with the maximum available time-frequency resource. The control method is the same as that described above.

In an embodiment of the present disclosure, the information on time domain symbols of the PDSCH to be transmitted to the Port Physical Layer (PHY) may be determined from the information on actual mapping time domain symbols and the information on the maximum available time domain symbol; and the information on time domain symbols of the PDSCH in the DCI may be determined from the information on actual mapping time domain symbols and the information on the maximum available time domain symbol.

It should be noted that the method for configuring PDSCH time-frequency resources provided in the embodiment of the disclosure may be applied to a 5GNR (5th Generation New Radio) mobile communication system, or may be applied to a mobile communication system corresponding to the 3rd Generation or the 4th Generation mobile communication technologies.

According to the method for configuring PDSCH time-frequency resources provided in the embodiment of the disclosure, during the process of certain embodiments, target time-frequency resources are used to bear a PDSCH, the target time-frequency resources being time-frequency resources among the time-frequency resources corresponding to symbols of a CORESET other than those occupied by a physical downlink control channel (PDCCH). In other words, the PDSCH can use resources that are not occupied by the PDCCH on the symbol to which the CORESET belongs, thereby avoiding waste of resources to some extent, and thus improving the bandwidth utilization rate and the peak rate.

### Embodiment II

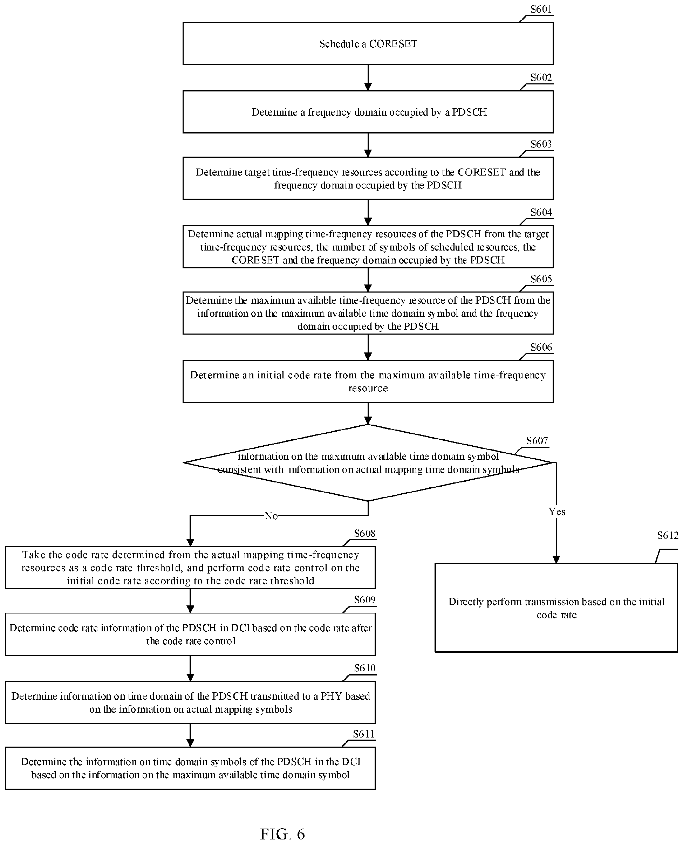

On the basis of Embodiment I, this embodiment provides a method for configuring PDSCH time-frequency resources. As shown in FIG. 6, the method may include operations S601 to S612.

At operation S601, a CORESET is scheduled.

In one scheduling, part of the time-frequency resources will be scheduled to serve as the CORESET, and the CORESET includes time-frequency resources used to bear the PDCCH, that is, time-frequency resources occupied by the PDCCH.

At operation S602, a frequency domain occupied by the PDSCH is determined.

In one scheduling, a frequency will be scheduled for the PDSCH. That is, the frequency domain occupied by the PDSCH is determined.

At operation S603, the target time-frequency resources are determined according to the CORESET and the frequency domain occupied by the PDSCH.

The target time-frequency resources are time-frequency resources having an overlapped frequency domain with the PDSCH among the time-frequency resources corresponding to a symbol to which the CORESET belongs other than those occupied by the PDCCH. That is, the symbol to which the target time-frequency resources belongs is the symbol to which the CORESET belongs, the frequency domain to which the target time-frequency resources belongs is the frequency domain occupied by the PDSCH, and the frequency domain to which the target time-frequency resources belongs is different from the frequency domain occupied by the PDCCH (i.e., the frequency domain to which the target time-frequency resources belongs does not overlap the frequency domain occupied by the PDCCH). For example, assuming that the CORESET belongs to symbol 0 and symbol 1, the PDCCH occupies a frequency domain of 0 to 10M on symbol 0, the PDCCH occupies a frequency domain of 0 to 10M on symbol 2, and the PDSCH occupies the frequency domain of 13M to 15M, then the target time-frequency resources are the time-frequency resources on symbol 0 and symbol 1 and occupying the frequency domain of 13M to 15M.

At operation S604, actual mapping time-frequency resources of the PDSCH are determined from the target time-frequency resources, the number of symbols of scheduled resources, the CORESET and the frequency domain occupied by the PDSCH.

In this embodiment, the actual mapping time-frequency resources include the target time-frequency resources and the first time-frequency resource. The first time-frequency resource occupies the same frequency domain as the PDSCH, and the time domain occupied by the first time-frequency resource includes the remaining symbols in the scheduled resources other than those to which the CORESET belongs.

At operation S605, the maximum available time-frequency resource of the PDSCH is determined from the information on the maximum available time domain symbol and the frequency domain occupied by the PDSCH.

In this embodiment, the information on the maximum available time domain symbol includes a second total number of symbols and a second start symbol. The second start symbol is determined from a start symbol of the remaining time-frequency resources among the time-frequency resources corresponding to the symbol to which the CORESET belongs other than those occupied by the PDCCH. That is, if, among the time-frequency resources corresponding to the symbol to which the CORESET belongs, there are some other resources other than the time-frequency resources occupied by the PDCCH, a start symbol of these resources is thereby taken as the second start symbol. If all the time-frequency resources corresponding to the symbol to which the CORESET belongs are occupied by the PDCCH, a symbol after the symbol to which the CORESET belongs may be taken as the second start symbol. The second total number of symbols = the total number of symbols of scheduled resources - the second start symbol. The scheduled resources here refer to the total resources scheduled at this time. For example, assuming that the resource scheduled at this time is 1 frame including 14 symbols, indicated by symbol 0 to symbol 13, respectively, and assuming that the CORESET belongs to symbol 0 and symbol 1, if, among the resources corresponding to symbol 0 and symbol 1, both have remaining time-frequency resources other than the time-frequency resources occupied by the PDCCH, then the second start symbol is symbol 0, and the second total number of symbols is 14 - 0 = 14; and if the resources corresponding to symbol 0 and symbol 1 are all occupied by the PDCCH, i.e., both have no remaining time-frequency resource, then symbol 2 is the second start symbol, and the second total number of symbols is 14 - 2 = 12.

The number of symbols occupied by the maximum available time-frequency resource is the second total number of symbols, and the frequency domain thereof is the frequency domain occupied by the PDSCH.

At operation S606, an initial code rate is determined from the maximum available time-frequency resource.

For the specific manner of determining a code rate corresponding to a certain time-frequency resource, please refer to Embodiment I, which is not repeated here.

At operation S607, whether the information on the maximum available time domain symbol is consistent with the information on actual mapping time domain symbols is judged.

If yes, go to operation S612; if not, go to operation S608.

In this embodiment, the information on actual mapping time domain symbols includes a first start symbol and a first total number of symbols, and the first start symbol is a start symbol of the target time-frequency resources. If the target time-frequency resource is empty, the first start symbol is a symbol after the symbol to which the CORESET belongs. The first total number of symbols = the total number of symbols of scheduled resources - the first start symbol.

When judging whether the information on the maximum available time domain symbol is consistent with the information on actual mapping time domain symbols, the first start symbol is compared with the second start symbol, and the first total number of symbols is compared with the second total number of symbols. If either or both of the comparison results is different, it is determined that the information on the maximum available time domain symbol is not consistent with the information on actual mapping time domain symbols.

At operation S608, the code rate determined from the actual mapping time-frequency resources is taken as a code rate threshold, and code rate control is performed on the initial code rate according to the code rate threshold.

If the initial code rate is greater than the code rate threshold, the MCS corresponding to the maximum available time-frequency resource is reduced, and then the code rate is re-determined until the determined code rate is smaller than the code rate threshold. If the MCS index is reduced to 0 and the determined code rate is still greater than the code rate threshold, the scheduling is abandoned, namely, the target time-frequency resources are abandoned for bearing the PDSCH.

At operation S609, code rate information of the PDSCH in DCI is determined based on the code rate after the code rate control.

In this embodiment, a value of rateMatchIndicator in DCI is determined according to the code rate after the code rate control.

At operation S610, information on time domain symbols of the PDSCH transmitted to a PHY is determined based on the information on actual mapping symbols.

At operation S611, the information on time domain symbols of the PDSCH in the DCI is determined based on the information on the maximum available time domain symbol.

A value of PDSCH-TimeDomainResourceAllocation in the DCI is determined according to the information on the maximum available time domain symbol.

At operation S612, transmission is directly performed based on the initial code rate.

For better understanding of the present disclosure, several examples are described herein.

### First Example

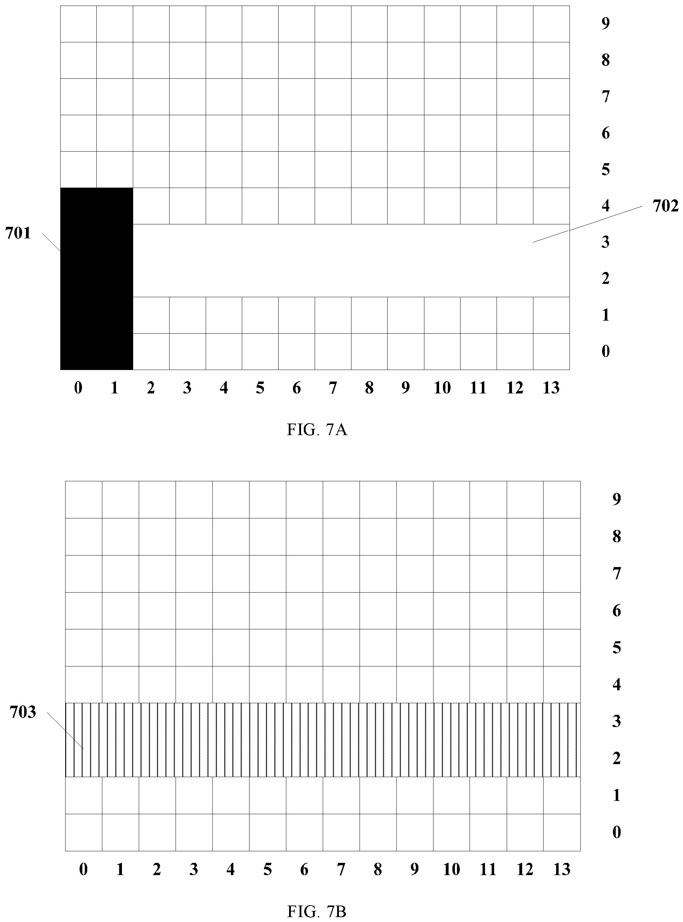

Referring to FIGs. 7A and 7B, assuming that in one scheduling, the scheduled resource (as shown by the largest boxes in FIGs. 7A and 7B, where the horizontal direction represents the time domain and the vertical direction represents the frequency domain) is one frame including 14 symbols, indicated by symbol 0 to symbol 13, respectively, one symbol includes 10 REs, indicated by RE0 to RE9, respectively, and the CORESET belongs to symbol 0 and symbol 1, then in the CORESET, the time-frequency resources 701 occupied by the PDCCH are RE0 to RE4 on symbol 0, RE0 to RE4 on symbol 1, and the frequency domain occupied by the PDSCH is RE2 to RE3. Since RE2 and RE3 are occupied by the PDCCH on both symbols (symbol 0 and symbol 1) to which the CORESET belongs, among the time-frequency resources corresponding to the symbols to which the CORESET belongs, there is no time-frequency resource overlapping in the frequency domain with the PDSCH other than the time-frequency resources 701 occupied by the PDCCH. Thus, the target time-frequency resource 702 is empty, the actual mapping time-frequency resources 702 include RE2 to RE3 on symbol 2 to symbol 13, and in the information on actual mapping time domain symbols, the first start symbol is symbol 2, and the first total number of symbols is 12. Since, among the time-frequency resources corresponding to the symbols to which the CORESET belongs, there are remaining resources other than the time-frequency resources occupied by the PDCCH, in the information on the maximum available time domain symbol, the second start symbol is symbol 0, the second total number of symbols is 14, the maximum available time-frequency resource 703 occupies 14 symbols and a frequency domain corresponding to RE2 to RE3. That is, the maximum available time-frequency resource 703 includes RE2 to RE3 on symbol 0 to symbol 13. The initial code rate is determined from the maximum available time-frequency resource, and since the first start symbol number is not consistent with the second start symbol number, and the first total number of symbols is not consistent with the second total number of symbols, the code rate determined from the actual mapping time-frequency resources is taken as a code rate threshold, according to which the code rate control on the initial code rate is performed by reducing the MCS index value corresponding to the maximum available time-frequency resource. Then, the value of rateMatchIndicator in the DCI is determined according to the controlled code rate. Information on time domain symbols of the PDSCH to be transmitted to a PHY is determined based on the information on actual mapping time domain symbols. The index of PDSCH-TimeDomainResourceAllocation in the DCI is determined based on the information on the maximum available time domain symbol.

### Second Example

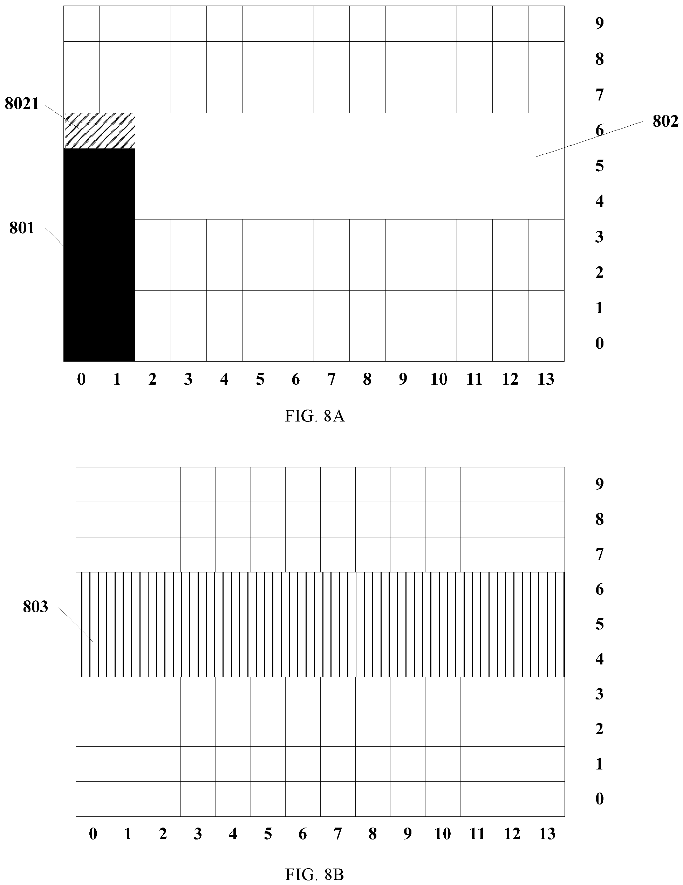

Referring to FIGs. 8A and 8B, assuming that in one scheduling, the scheduled resource (as shown by the largest boxes in FIGs. 8A and 8B, where the horizontal direction represents the time domain and the vertical direction represents the frequency domain) is one frame including 14 symbols, indicated by symbol 0 to symbol 13, respectively, one symbol includes 10 REs, indicated by RE0 to RE9, respectively, and the CORESET belongs to symbol 0 and symbol 1, then in the CORESET, the time-frequency resources 801 occupied by the PDCCH are RE0 to RE5 on symbol 0, RE0 to RE5 on symbol 1, and the PDSCH occupies the frequency domain RE4 to RE6, Since RE6 is not occupied by the PDCCH on the symbols (symbol 0 and symbol 1) to which the CORESET belongs, among the time-frequency resources corresponding to the symbols to which the CORESET belongs, there is a time-frequency resource overlapping in the frequency domain with the PDSCH other than those occupied by the PDCCH. Thus, the target time-frequency resource 8021 includes RE6 on symbol 1 and symbol 0, the actual mapping time-frequency resources 802 include RE6 on symbol 1 and symbol 0 and RE4 to RE6 on symbol 2 to symbol 13, and in the information on actual mapping time domain symbols, the first start symbol is symbol 0, and the first total number of symbols is 14. Since, among the time-frequency resources corresponding to the symbols to which the CORESET belongs, there are remaining resources other than the time-frequency resources occupied by the PDCCH, in the information on the maximum available time domain symbol, the second start symbol is symbol 0, the second total number of symbols is 14, the maximum available time-frequency resource 803 occupies 14 symbols and a frequency domain corresponding to RE4 to RE6. That is, the maximum available time-frequency resource includes RE4 to RE6 on symbol 0 to symbol 13. The initial code rate is determined from the maximum available time-frequency resource, and since the first start symbol number is consistent with the second start symbol number, and the first total number of symbols is consistent with the second total number of symbols, the value of rateMatchIndicator in the DCI is determined directly according to the determined initial code rate. Information on time domain symbols of the PDSCH to be transmitted to a PHY is determined based on the information on actual mapping time domain symbols. The index of PDSCH-TimeDomainResourceAllocation in the DCI is determined based on the information on the maximum available time domain symbol.

### Third Example

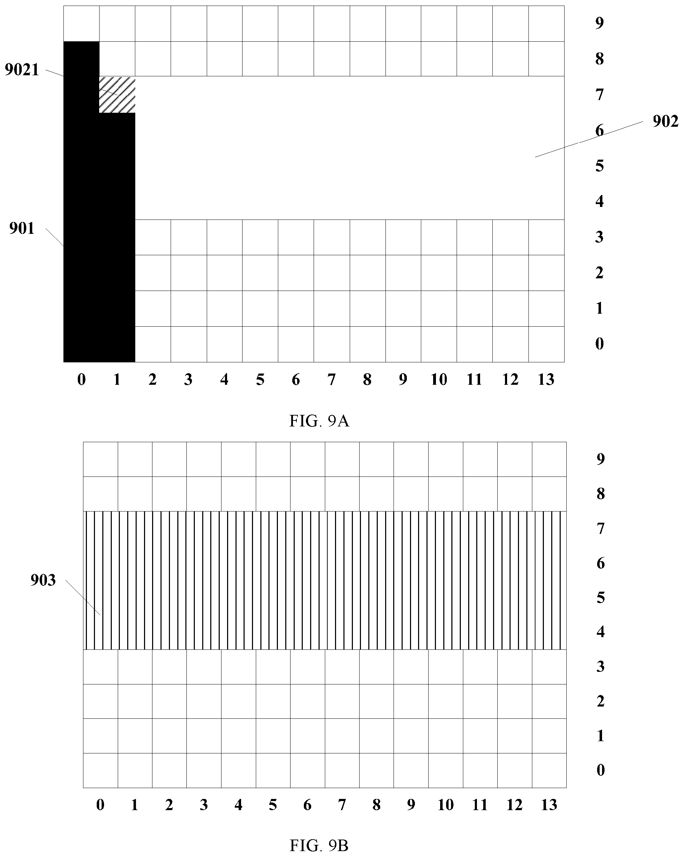

Referring to FIGs. 9A and 9B, assuming that in one scheduling, the scheduled resource (as shown by the largest boxes in FIGs. 9A and 9B, where the horizontal direction represents the time domain and the vertical direction represents the frequency domain) is one frame including 14 symbols, indicated by symbol 0 to symbol 13, respectively, one symbol includes 10 REs, indicated by RE0 to RE9, respectively, and the CORESET belongs to symbol 0 and symbol 1, then in the CORESET, the time-frequency resources 901 occupied by the PDCCH are RE0 to RE8 on symbol 0, RE0 to RE6 on symbol 1, and the PDSCH occupies the frequency domain RE4 to RE7. Since on the symbols to which the CORESET belongs, RE9 on symbol 0 is not occupied by the PDCCH, and RE7 on symbol 1 is not occupied by the PDCCH, among the time-frequency resources corresponding to the symbols to which the CORESET belongs, there is a time-frequency resource overlapping in the frequency domain with the PDSCH other than those occupied by the PDCCH. Thus, the target time-frequency resource 9021 includes RE7 on symbol 1, the actual mapping time-frequency resources 902 include RE7 on symbol 1 and RE4 to RE7 on symbol 2 to symbol 13, and in the information on actual mapping symbols, the first start symbol is symbol 1, and the first total number of symbols is 13. Since, among the time-frequency resources corresponding to the symbols to which the CORESET belongs, there are remaining resources other than the time-frequency resources occupied by the PDCCH, in the information on the maximum available time domain symbol, the second start symbol is symbol 0, the second total number of symbols is 14, the maximum available time-frequency resource 903 occupies 14 symbols and a frequency domain corresponding to RE4 to RE7. That is, the maximum available time-frequency resource 903 includes RE4 to RE7 on symbol 0 to symbol 13. The initial code rate is determined from the maximum available time-frequency resource, and since the first start symbol number is not consistent with the second start symbol number, and the first total number of symbols is not consistent with the second total number of symbols, the code rate determined from the actual mapping time-frequency resources is taken as a code rate threshold, according to which the code rate control on the initial code rate is performed by reducing the MCS index value corresponding to the maximum available time-frequency resource. Then, the value of rateMatchIndicator in the DCI is determined according to the controlled code rate. Information on time domain symbols of the PDSCH to be transmitted to a PHY is determined based on the information on actual mapping time domain symbols. The index of PDSCH-TimeDomainResourceAllocation in the DCI is determined based on the information on the maximum available time domain symbol.

According to the method for configuring PDSCH time-frequency resources provided in the embodiment of the disclosure, during the process of certain embodiments, target time-frequency resources are used to bear a PDSCH, where among the time-frequency resources corresponding to the symbols to which the CORESET belongs, there is a time-frequency resource overlapping in the frequency domain with the PDSCH other than those occupied by the PDCCH. In other words, the PDSCH can use resources that are not occupied by the PDCCH and have a frequency domain same to the frequency domain occupied by the PDSCH on the symbol to which the CORESET belongs, thereby avoiding waste of resources to some extent, and thus improving the bandwidth utilization rate and the peak rate.

### Embodiment III

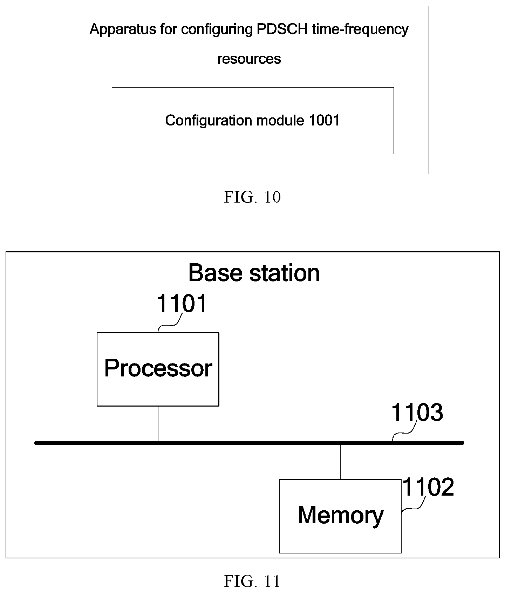

On the basis of Embodiments I and II, this embodiment of the present disclosure provides an apparatus for configuring PDSCH time-frequency resources. Referring to FIG. 10, the apparatus for configuring PDSCH time-frequency resources includes: a configuration module 1001 configured to use target time-frequency resources to bear a PDSCH. The target time-frequency resources are time-frequency resources among the time-frequency resources corresponding to a symbol to which a CORESET belongs other than those occupied by a PDCCH. It should be noted that, in one scheduling, part of the time-frequency resources will be scheduled to serve as the CORESET, and the CORESET includes time-frequency resources used to bear the PDCCH, that is, time-frequency resources occupied by the PDCCH. For the symbol, it is a unit of measurement in the time domain, 1 symbol is 1/14ms (milliseconds), one subframe (1 ms) includes 2 time slots (1/2 ms), and 1 time slot includes 7 symbols. The symbols corresponding to the time-frequency resources occupied by the CORESET are the symbol to which the CORESET belongs. In an embodiment of the present disclosure, the time-frequency resources among the time-frequency resources corresponding to the symbol to which the CORESET belongs other than those occupied by a PDCCH are taken as target time-frequency resources used to bear the PDSCH, thereby avoiding waste of resources. In this embodiment, all the time-frequency resources among the time-frequency resources corresponding to the symbol to which the CORESET belongs other than those occupied by a PDCCH may be taken as the target time-frequency resources used to bear the PDSCH; or part of the time-frequency resources among the time-frequency resources corresponding to the symbol to which the CORESET belongs other than those occupied by a PDCCH may be taken as the target time-frequency resources used to bear the PDSCH.

In one scheduling, a frequency will be scheduled for the PDSCH. Therefore, in an embodiment of the present disclosure, the apparatus for configuring PDSCH time-frequency resources may further include a determination module configured to determine a frequency domain occupied by the PDSCH. The configuration module is further configured to determine the target time-frequency resources according to the frequency domain occupied by the PDSCH. Here, the target time-frequency resources may be time-frequency resources having an overlapped frequency domain with the PDSCH among the time-frequency resources corresponding to a symbol to which the CORESET belongs other than those occupied by the PDCCH. That is, the target time-frequency resources have a frequency domain that is the same as the frequency domain scheduled for the PDSCH, and a time domain including the symbol to which the CORESET belongs, and the frequency domain of the target time-frequency resources does not overlap the frequency domain occupied by the PDCCH.

In an embodiment of the present disclosure, the apparatus for configuring PDSCH time-frequency resources may further include an actual mapping time-frequency resource determination module configured to determine the actual mapping time-frequency resources of the PDSCH. It should be noted that in addition to the target time-frequency resources, the actual mapping time-frequency resources of the PDSCH further includes time-frequency resources other than the symbol to which the CORESET belongs (hereafter "the first time-frequency resource"), and then the PDSCH data is transmitted through the actual mapping time-frequency resources of the PDSCH. The actual mapping time-frequency resources are resources actually occupied by the PDSCH in the subsequent transmission. The first time-frequency resource refers to resources, other than those occupied by the CORESET, among the scheduled resources on the remaining symbols having a frequency domain being the frequency domain occupied by the PDSCH. The scheduled resources are the total resources for this scheduling. For example, assuming that the scheduled resources correspond to 14 symbols, which are respectively indicated as symbol 0 to symbol 13, and that the CORESET belongs to symbol 0, symbol 1 and symbol 2, and the PDSCH occupies the frequency domain of 10M to 15M, then the first time-frequency resource belongs to symbols 3 to 13, and occupies the frequency domain of 10M to 15M. Therefore, the actual mapping time-frequency resources can be determined according to the target time-frequency resources, the number of symbols of scheduled resources, the CORESET and the frequency domain occupied by the PDSCH.

In an embodiment of the present disclosure, the apparatus for configuring PDSCH time-frequency resources may further include a code rate determination module configured to determine a code rate. When determining the code rate, the code rate may be determined from the actual mapping time-frequency resources, or may be determined from the maximum available time-frequency resource of the PDSCH. The maximum available time-frequency resource is determined from information on the maximum available time domain symbol and the frequency domain occupied by the PDSCH. The information on the maximum available time domain symbol includes a second total number of symbols and/or a second start symbol. The second total number of symbols includes the number of symbols corresponding to the remaining time-frequency resources among the time-frequency resources corresponding to the symbol to which the CORESET belongs other than those occupied by a PDCCH, and the corresponding number of the remaining symbols in the scheduled resources other than the symbol to which the CORESET belongs. For example, assuming that the scheduled resources correspond to 14 symbols, which are respectively indicated as symbol 0 to symbol 13, and that the CORESET belongs to symbol 0, symbol 1 and symbol 2, each of which has remaining resources except those occupied by the PDCCH, then the remaining resources corresponding to 3 symbols, and except the symbol to which the CORESET belongs, the symbols left in the scheduled resources are symbol 3 to symbol 13, corresponding to 11 symbols, and thus, the second total number of symbols is 14. If, among the time-frequency resources corresponding to the symbol to which the CORESET belongs, there is no remaining resource other than the time-frequency resources occupied by the PDCCH, the second total number of symbols includes only the corresponding number of the remaining symbols in the scheduled resources other than the symbol to which the CORESET belongs. The second start symbol is determined from a start symbol of the remaining time-frequency resources among the time-frequency resources corresponding to the symbol to which the CORESET belongs other than those occupied by the PDCCH. For example, assuming that the CORESET belongs to symbol 0 and symbol 1, each of which has remaining resources except those occupied by the PDCCH, then the second start symbol is symbol 0. If, among the time-frequency resources corresponding to the symbol to which the CORESET belongs, there is no remaining resource other than the time-frequency resources occupied by the PDCCH, the second start symbol is a symbol after the symbol to which the CORESET belongs. Since the CORESET usually takes a position earlier in the time domain in the scheduled resources, there is a certain relationship among the second total number of symbols, the number of symbols of scheduled resources, and the second start symbol, and when the symbol starts with 0, the second total number of symbols + the second start symbol = the number of symbols of scheduled resources. Due to the relationship among the second total number of symbols, the number of symbols of scheduled resources, and the second start symbol, the second total number of symbols can be determined from the second start symbol and the number of symbols of scheduled resources. The number of symbols occupied by the maximum available time-frequency resource is the second total number of symbols, and the frequency domain is the same as the frequency domain occupied by the PDSCH.

It should be noted that the specific manner of determining the code rate according to the time-frequency resources may refer to Embodiment I, which is not repeated here.

In this embodiment, after determining the code rate, the code rate may be controlled, for example, according to a preset code rate threshold. Alternatively, if the code rate is determined from the maximum available time-frequency resource, then the code rate determined from the actual mapping time-frequency resources may be taken as a code rate threshold, the code rate determined from the maximum available time-frequency resource may be used as an initial code rate, and code rate control is performed on the initial code rate according to the code rate threshold. The controlled code rate is smaller than the code rate threshold. The code rate is related to the MCS, and when the initial code rate is greater than the code rate threshold, the initial code rate may be reduced by reducing the MCS index corresponding to the maximum available time-frequency resource. In an embodiment of the present disclosure, the code rate information of the PDCSH in DCI is determined based on the code rate after the code rate control.

In an embodiment of the present disclosure, the code rate control may be performed on the code rate when the information on actual mapping time domain symbols is not consistent with the information on the maximum available time domain symbol. The information on actual mapping time domain symbols may include a first start symbol and/or a first total number of symbols, the first total number of symbols is the total number of symbols occupied by the actual mapping time-frequency resources, that is, the number of symbols corresponding to the target time-frequency resources and the number of the remaining symbols in the scheduled resources other than those occupied by the CORESET. For example, assuming that the scheduled resources occupy 14 symbols, which are respectively indicated as symbol 0 to symbol 13, and the CORESET belongs to symbol 0 and symbol 1, and the target time-frequency resources belong to symbol 1, then the first total number of symbols = the number of symbols occupied by the target time-frequency resources + the number of remaining symbols in the scheduled resources other than the symbol to which the CORESET belongs = 1+12=13. If no target time-frequency resource is present, (that is, there is no time-frequency resource having an overlapped frequency domain with the PDSCH among the time-frequency resources corresponding to the symbol to which the CORESET belongs other than those occupied by the PDCCH; in other words, the target time-frequency resource is empty), the first total number of symbols includes only the number of the remaining symbols in the scheduled resources other than those occupied by the CORESET. The first start symbol is a start symbol corresponding the target time-frequency resources, and if no target time-frequency resource is present, a symbol after the symbol to which the CORESET belongs may be taken as the first start symbol. Since in one scheduling, the resource occupied by the CORESET usually takes a position earlier in the time domain in the scheduled resources, there is a certain relationship among the first total number of symbols, the number of symbols of scheduled resources, and the first start symbol number, and when the symbol starts with 0, the first total number of symbols + the first start symbol = the number of symbols of scheduled resources. Due to the relationship among the first total number of symbols, the number of symbols of scheduled resources, and the first start symbol, the first total number of symbols can be determined from the first start symbol and the number of symbols of scheduled resources. It will be appreciated that when the information on actual mapping time domain symbols and the information on the maximum available time domain symbol are compared to determine whether they are consistent, the first start symbol is compared with the second start symbol, and the first total number of symbols is compared with the second total number of symbols.

In an embodiment of the present disclosure, the code rate may also be controlled when the actual mapping time-frequency resources are not consistent with the maximum available time-frequency resource. The control method is the same as that described above.

In an embodiment of the present disclosure, the information on time domain symbols of the PDSCH to be transmitted to the Port Physical Layer (PHY) may be determined from the information on actual mapping time domain symbols and the information on the maximum available time domain symbol; and the information on time domain symbols of the PDSCH in the DCI may be determined from the information on actual mapping time domain symbols and the information on the maximum available time domain symbol.

It should be noted that the apparatus for configuring PDSCH time-frequency resources provided in the embodiment of the disclosure maybe applied to a 5GNR (5th Generation New Radio) mobile communication system, or may be applied to a mobile communication system corresponding to the 3rd Generation or the 4th Generation mobile communication technologies.

In an embodiment of the present disclosure, the configuration module, the determination module, the actual mapping time-frequency resource determination module, and the code rate determination module may be implemented by a processor or other hardware units.

### Embodiment IV

An embodiment of the present disclosure provides a scheduler configured to implement at least one operation of the method for configuring PDSCH time-frequency resources according to the Embodiments I or II. The scheduler may be a MAC (Media Access Control) scheduler, and obviously, may be other types of schedulers.

An embodiment of the present disclosure provides a base station which, as shown in FIG. 11, includes a processor 1101, a memory 1102, and a communication bus 1103.

The communication bus 1103 is configured to enable connection and communication between the processor 1101 and the memory 1102.

The processor 1101 is configured to execute one or more computer programs stored in the memory 1102 to implement at least one operation of the method for configuring PDSCH time-frequency resources according to the Embodiments I or II.

An embodiment of the present disclosure further provides a storage medium, including volatile or non-volatile, removable or non-removable media implemented in any method or technology for storage of information, such as computer-readable instructions, data structures, computer program modules, or other data. The storage medium includes, but is not limited to a Random Access Memory (RAM), a Read-Only Memory (ROM), an Electrically Erasable Programmable read only memory (EEPROM), a flash memory or any other memory technology, a Compact Disc Read-Only Memory (CD-ROM), a digital versatile disc (DVD) or any other optical disc storage, magnetic cartridge, magnetic tape, magnetic disk storage or any other magnetic storage device, or may be any other medium used for storing the desired information and accessible by a computer. The storage medium in this embodiment may be configured to store one or more computer programs that are executable by a processor to implement at least one operation of the method for configuring PDSCH time-frequency resources according to the Embodiments I or II.

According to the method and apparatus for configuring PDSCH time-frequency resources, the scheduler, the base station and the storage medium provided in the embodiments of the present disclosure, target time-frequency resources are used to bear a PDSCH, the target time-frequency resources being time-frequency resources among the time-frequency resources corresponding to symbols of a CORESET other than those occupied by a physical downlink control channel (PDCCH), so that during some implementations, the PDSCH can use resources that not occupied by the PDCCH on the symbol to which the CORESET belongs, thereby avoiding waste of resources to some extent, and thus improving the bandwidth utilization rate and the peak rate.

Those of ordinary skill in the art will appreciate that all or some operations of the above described method, functional modules/units in the system and apparatus may be implemented as software (which may be implemented by computer program codes executable by a computing device), firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit.

Moreover, it is well known to those skilled in the art that a communication medium typically includes a computer-readable instruction, a data structure, a computer program module, or other data in a modulated data signal, such as a carrier wave or other transport mechanism, and may include any information delivery medium. In this way, the present disclosure is not restricted to any particular hardware and software combination.

The above are further detailed explanation of the embodiments of the present disclosure in conjunction with specific embodiments, and the present disclosure is not to be construed as being limited to these embodiments. For those ordinary skilled in the art to which the present disclosure pertains, several simple deductions or substitutions can be made without departing from the concept of the disclosure, which deductions and substitutions should also be considered as falling within the scope of the disclosure.

## Claims

1. A method for configuring Physical Downlink Shared Channel (PDSCH) time-frequency resources, comprising: using target time-frequency resources to bear a PDSCH, the target time-frequency resources being time-frequency resources among time-frequency resources corresponding to a symbol to which a control resource set (CORESET) belongs other than time-frequency resources occupied by a physical downlink control channel (PDCCH).

2. The method for configuring PDSCH time-frequency resources according to claim 1, further comprising:
determining a frequency domain occupied by the PDSCH;
the target time-frequency resources being time-frequency resources having an overlapped frequency domain with the PDSCH among the time-frequency resources corresponding to the symbol to which the CORESET belongs other than the time-frequency resources occupied by the PDCCH.

3. The method for configuring PDSCH time-frequency resources according to claim 2, further comprising: controlling a code rate.

4. The method for configuring PDSCH time-frequency resources according to claim 3, further comprising:
determining information on actual mapping time domain symbols of the PDSCH, wherein the information on actual mapping time domain symbols comprises a first start symbol and/or a first total number of symbols, the first start symbol is determined from a start symbol of the target time-frequency resources, the first total number of symbols is determined from the first start symbol and a number of symbols of scheduled resources, and the scheduled resources refer to total resources scheduled at this time;
determining information on a maximum available time domain symbol of the PDSCH, wherein the information on the maximum available time domain symbol comprises a second start symbol and/or a second total number of symbols, the second start symbol is determined from a start symbol of remaining time-frequency resources among the time-frequency resources corresponding to the symbol to which the CORESET belongs other than the time-frequency resources occupied by the PDCCH, the second total number of symbols is determined from the second start symbol and the number of symbols of scheduled resources; and
performing code rate control on the code rate when the information on actual mapping time domain symbols is not consistent with the information on the maximum available time domain symbol.

5. The method for configuring PDSCH time-frequency resources according to claim 4, wherein performing code rate control on the code rate comprises:
determining a maximum available time-frequency resource of the PDSCH from the information on the maximum available time domain symbol and the frequency domain occupied by the PDSCH, and determining an initial code rate from the maximum available time-frequency resource;
determining actual mapping time-frequency resources of the PDSCH from the target time-frequency resources, the number of symbols of scheduled resources, the CORESET and the frequency domain occupied by the PDSCH, and taking a code rate determined from the actual mapping time-frequency resources as a code rate threshold; and
performing code rate control on the initial code rate according to the code rate threshold.

6. The method for configuring PDSCH time-frequency resources according to claim 5, wherein performing code rate control on the initial code rate according to the code rate threshold comprises:
reducing, when the initial code rate is greater than the code rate threshold, a Modulation and Coding Scheme (MCS) index corresponding to the maximum available time-frequency resource to reduce the code rate.

7. The method for configuring PDSCH time-frequency resources according to claim 3, further comprising:
determining code rate information of the PDSCH in Downlink Control Information (DCI) based on the code rate after code rate control.

8. The method for configuring PDSCH time-frequency resources according to claim 2, further comprising:
determining information on actual mapping time domain symbols of the PDSCH, wherein the information on actual mapping time domain symbols comprises a first start symbol and/or a first total number of symbols, the first start symbol is determined from a start symbol of the target time-frequency resources, the first total number of symbols is determined from the first start symbol and a number of symbols of scheduled resources, and the scheduled resources refer to total resources scheduled at this time;
determining information on time domain symbols of the PDSCH transmitted to a Port Physical Layer (PHY) based on the information on actual mapping time domain symbols.

9. The method for configuring PDSCH time-frequency resources according to claim 2, further comprising:
determining information on a maximum available time domain symbol of the PDSCH, wherein the information on the maximum available time domain symbol comprises a second start symbol and/or a second total number of symbols, the second start symbol is determined from a start symbol of remaining time-frequency resources among the time-frequency resources corresponding to the symbol to which the CORESET belongs other than the time-frequency resources occupied by the PDCCH, the second total number of symbols is determined from the second start symbol and the number of symbols of scheduled resources, and the scheduled resources refer to total resources scheduled at this time; and
determining information on time domain symbols of the PDSCH in the DCI based on the information on the maximum available time domain symbol.

10. An apparatus for configuring Physical Downlink Shared Channel (PDSCH) time-frequency resources, comprising:
a configuration module configured to use target time-frequency resources to bear a PDSCH, the target time-frequency resources being time-frequency resources among time-frequency resources corresponding to a symbol to which a control resource set (CORESET) belongs other than time-frequency resources occupied by a physical downlink control channel (PDCCH).

11. A scheduler configured to implement the method for configuring Physical Downlink Shared Channel (PDSCH) time-frequency resources according to any one of claims 1 to 9.

12. The scheduler according to claim 11, wherein the scheduler is a Medium Access Control (MAC) scheduler.

13. A base station, comprising: a processor, a memory, and a communication bus; wherein
the communication bus is configured to enable connection and communication between the processor and the memory; and
the processor is configured to execute one or more computer programs stored in the memory to implement the method for configuring Physical Downlink Shared Channel (PDSCH) time-frequency resources according to any one of claims 1 to 9.

14. A storage medium having one or more computer programs stored thereon which, when executed by one or more processors, cause the method for configuring Physical Downlink Shared Channel (PDSCH) time-frequency resources according to any one of claims 1 to 9 to be implemented.
